# EUROPÄISCHE PATENTANMELDUNG

(11) **EP 2 202 084 A1**
(43) Veröffentlichungstag der Anmeldung: **30.06.2010**
(21) Anmeldenummer: 08405312.3
(22) Anmeldetag: 22.12.2008
(51) Int. Cl.: B41N 1/22, B41N 7/00, B41C 1/18, B29C 70/22, B41F 13/08

(54) **Walze für eine Druckmaschine, Druckmaschine mit der Walze sowie Verfahren zum Herstellen der Walze**

(71) Anmelder: Müller Martini Holding AG, 6052 Hergiswil (CH)
(72) Erfinder: Erber, Andreas, 70499 Stuttgart (DE); von Reden, Tjark, 70197 Stuttgart (DE); Carosella, Stefan, 71397 Leutenbach (DE); Drechsler, Klaus, 83620 Feldkirchen-Westerham (DE)

(57) **Zusammenfassung**

Die Erfindung betrifft eine Walze (1) für eine Druckmaschine, deren Wand (10, 100, 110, 120) wenigstens teilweise aus faserverstärktem Kunststoff besteht. Erfindungsgemäß ist der Kunststoff durch Fasern verstärkt, die in mindestens einem Fasergeflecht (14) angeordnet sind.

Zur Herstellung der erfindungsgemäßen Walze (1) ist ein Verfahren mit den folgenden Verfahrensschritten vorgesehen:
a) ein Bereitstellen eines Flechtkerns (16, 16', 16", 16"'),
b) ein Umflechten des Flechtkerns (16, 16', 16", 16"') mit Flechtfäden (142, 146) und Stehfäden (144) des Fasergeflechts (14) und
c) ein Infiltrieren des Fasergeflechts (14) mit Kunststoff.

## Beschreibung

Die Erfindung betrifft eine Walze für eine Druckmaschine nach dem Oberbegriff des Anspruchs 1, eine Druckmaschine mit der Walze gemäß Anspruch 19 und ein Verfahren zu deren Herstellung gemäß Anspruch 20.

In Druckmaschinen, insbesondere Rotationsdruckmaschinen, sind üblicherweise diverse Walzen angeordnet, die u. a. einen Bedruckstoff fördern, Druckfarbe aufnehmen und/oder Druckfarbe an den Bedruckstoff abgeben. Solche Walzen sind meist aus Metall gefertigt, weshalb sie besonders bei großer axialer Breite zu einer Durchbiegung sowie zur Ausbildung lokaler Temperaturerhöhungen neigen und generell ein hohes Gewicht aufweisen. Solche Walzen sind üblicherweise Beanspruchungen durch Biegung und Quetschung ausgesetzt.

Vereinzelt werden bereits auch andere Materialien bei der Konstruktion von Walzen verwendet. Mit Hilfe solcher alternativer Materialien lassen sich das Gewicht der Walzen reduzieren und je nach Materialwahl auch deren Festigkeitseigenschaften und Temperaturbeständigkeit gegen Dimensionsänderungen verbessern.

Eine Anregung hierzu findet sich in der DE 10 2007 006 207 A1, die einen Druckmaschinenzylinder mit einem Walzengrundkörper aus faserverstärktem Kunststoff offenbart. Bei dem Kunststoff handelt es sich insbesondere um Epoxidharz oder Polyurethan.

Auch die EP 1 754 601 A1 offenbart eine Walze in Form einer Hülse bestehend aus Kunststoff, beispielsweise einem kohlenstofffaserverstärkten Kunststoff.

Der Erfindung liegt die Aufgabe zugrunde, eine Walze der genannten Art zu schaffen, deren Gewicht weiter reduziert und/oder deren Festigkeitseigenschaften über bisherige Bauweisen aus Kunststoff hinausgehend verbessert und/oder deren Herstellungsverfahren flexibel und kostengünstig realisiert werden kann.

Weiterhin ist es Aufgabe, zur Herstellung der Walze ein einfaches Verfahren vorzustellen, welches den verschiedenen Anforderungen der Walzen mit unterschiedlichen Funktionen in der Druckmaschine gerecht wird.

Die Aufgabe wird durch eine Walze für eine Druckmaschine gemäß Anspruch 1, eine Druckmaschine gemäß Anspruch 19 und insbesondere durch ein Verfahren zur Herstellung der Walze nach Anspruch 20 gelöst.

Vorteilhafte Ausführungsformen sind in jeweiligen Unteransprüchen angegeben.

Die erfindungsgemäße Walze besteht gemäß dem Kennzeichen des Anspruchs 1 wenigstens teilweise aus Kunststoff, wobei die Fasern in Form mindestens einer Schicht eines Fasergeflechts angeordnet sind.

Der Vorteil der erfindungsgemäßen Walze gegenüber bekannten Walzen für Druckmaschinen liegt in weiterer Gewichtsersparnis bei verbesserten Festigkeitseigenschaften der Walze bezüglich den Beanspruchungen durch Biegung und Quetschung. Verantwortlich für die Verbesserung ist die Anordnung der Fasern in dem Fasergeflecht des faserverstärkten Kunststoffs.

Besonders vorteilhaft ist ein unidirektionales, biaxiales oder triaxiales Geflecht aus in solchen Fasergeflechten verwendeten Flechtfäden. In vorteilhaften Ausführungsformen des triaxialen Geflechts sind Stehfäden in axialer Richtung der Walze ausgerichtet und zwischen den Flechtfäden eingeflochten. Dadurch sind die Fasern gezielt in relevanten Belastungsrichtungen ausgerichtet.

Diese Art der Umflechtung fixiert die Stehfäden in axialer Richtung der Walze und beabstandet sie sicher zueinander.

Unter den verschiedenen Möglichkeiten von Fasergeflechtgeometrien ist zunächst ein triaxiales Fasergeflecht besonders vorteilhaft, weil beispielsweise ein axialer Stehfaden von symmetrisch zur Walzenlängsachse umflochtenen Flechtfäden gestützt zur Steifigkeit gegenüber Durchbiegung beiträgt.

Diesen Belastungen entsprechend sind in besonders vorteilhaften Ausführungsformen Flechtwinkel von 45° bis 90°, insbesondere 60° bis 70°, zwischen Flechtfäden und Stehfäden vorgesehen. Der Flechtwinkel ist generell zwischen den Flechtfäden und einer in axialer Richtung der Walze verlaufenden Achse aufgespannt. Die Stehfäden liegen in den oben genannten vorteilhaften Ausführungsformen in axialer Richtung. In weiteren vorteilhaften Ausführungsformen ist es darüberhinaus auch denkbar, dass die Stehfäden bezüglich der axialen Richtung der Walze in einem Stehfadenwinkel ausgerichtet sind und dann nicht als Bezugsachsen für den Flechtwinkel der Flechtfäden dienen.

In einer weiteren vorteilhaften Ausführungsform besteht die Wand der Walze aus mehreren Schichten des Fasergeflechts, wobei die Schichten in radialer Richtung übereinander liegen.

Ein mehrschichtiger Aufbau ist hinsichtlich optimaler Festigkeitseigenschaften von Vorteil.

Insbesondere hat es sich ferner als vorteilhaft herausgestellt, wenn die Schichten des Fasergeflechts versetzt übereinander liegen. Auf diese Weise sind die gegenüber den Flechtfäden dickeren Stehfäden der übereinander liegenden Schichten nebeneinander angeordnet, was zu einer wesentlich zylindrischeren Form der Wand und damit der Walze führt.

In einer vorteilhaften Ausführungsform der erfindungsgemäßen Walze ist das Fasergeflecht aus Kohlenstofffasern und/oder Glasfasern aufgebaut.

Eine Kombination verschiedenartiger Filamente, insbesondere von Stehfäden aus Kohlenstofffasern und Flechtfäden aus Glasfasern kann für die Optimierung der Festigkeitseigenschaften der Walze genutzt werden.

Weiterhin bestehen die Fasern vorteilhafter Ausführungsformen aus Aramid-, Natur- und anderen flechtbaren Fasern.

Beim Flechten des Fasergeflechts mittels einer Flechtmaschine muss ein Flechtkern als Grundform für die Walze zur Verfügung gestellt werden, der von dem Fasergeflecht umflochten wird. Der Flechtkern zeichnet sich verfahrensgünstig durch eine flechtfreundliche Geometrie aus. Dieses Kriterium ist mit einer mindestens annähernd kreiszylinderförmigen Gestaltung des Flechtkerns erfüllt. Eine flechtfreundliche Geometrie ist dann gegeben, wenn sich das Fasergeflecht eng an die Umfangsfläche des Flechtkerns anlegen kann. Je nach zu konstruierender Walze kann die Form der Walze auch besonders stark annähernd an die resultierende Walzenform, also exakt kreiszylinderförmig vorgesehen werden.

Im Unterschied dazu ist der Flechtkern in einer vorteilhaften Ausführungsform mit einem radial zurückgesetzten, einseitig geradlinigen Querschnitt, insbesondere mit abgerundeten Kanten in axialer Richtung der Walze, ausgeführt. Eine solche vorteilhaft ausgeführte Abflachung in dem radial zurückgesetzten Abschnitt des Querschnitts der Walze ist noch im Rahmen einer flechtfreundlichen Geometrie realisierbar und ermöglicht es, weitere Bauteile an der Wand anzubringen, die wegen der Funktion der zu konstruierenden Walze anzubringen sind.

Bei einer vorteilhaften Ausführungsform ist das Fasergeflecht der Wand vollumfänglich um den Flechtkern herumgeflochten, ohne dass eine Naht das Fasergeflecht als eine Trennstelle unterbricht.

Generell ist es auch möglich, statt eines nahtlos um einen Flechtkern herumgeflochtenen Fasergeflechts eine Fasergeflechtmatte vorzusehen. Die Fasergeflechtmatte wird beispielsweise um einen Kern, insbesondere überlappend, herumgelegt und anschließend infiltriert.

Auch ist es denkbar, dass ein ursprünglich vollumfänglich geflochtenes, zunächst nahtloses Fasergeflecht wegen nachfolgenden Arbeitsschritten beispielsweise einseitig in axialer Richtung aufgetrennt werden muss. Das Fasergeflecht wäre in einem solchen Fall an dieser Stelle unterbrochen. Es ist generell sinnvoll, solche Trennstellen zu vermeiden, um optimierte Festigkeitseigenschaften der Walze zu erreichen.
Dies ist bei der vorteilhaften Ausführungsform gegeben.

In einer vorteilhaften Ausführungsform der erfindungsgemäßen Walze besteht der im Walzeninneren angeordnete Flechtkern aus einem Kunststoffschaum.

Ein Flechtkern aus Kunststoffschaum hat den Vorteil, dass er besonders günstig hergestellt werden kann, ausreichend genaue Toleranzen ermöglicht und stabil genug gegenüber radialen Kräften des Fasergeflechts ist.

Eine alternative vorteilhafte Ausführungsform sieht vor, dass der Flechtkern ein hohles Kunststoffformteil aus einem Polyester, insbesondere aus Polyethylenterephthalat (PET), ist.

Ein solcher Flechtkern in Form eines hohlen Kunststoffformteils, welches ähnlich einer im Handel üblichen PET-Kunststoffflasche für Frischgetränke ist, bietet ebenfalls ausreichend Stabilität gegen radialen Druck des Fasergeflechts.

Bei einer weiteren vorteilhaften Ausführungsform weist die Walze Anbauteile auf, die in dem Kunststoff der Walze eingebettet sind.

Hiermit ist eine Konstruktion einer Walze gemeint, bei der ein beispielsweise vollumfänglich geschlossenes Fasergeflecht gemeinsam mit einem Anbauteil in einem Verfahrensschritt von dem Kunststoff infiltriert bzw. in einen Kunststoff eingebettet wird. Hierbei spielt es zunächst keine Rolle, aus welchem Material die Anbauteile bestehen. Zudem ist es zunächst offen, ob solche Anbauteile im Inneren des Fasergeflechts oder außerhalb des Fasergeflechts an der Wand angeordnet sind.

Gemeinsam mit dem Fasergeflecht infiltrierte Anbauteile sind zum einen besonders sicher mit der Wand verbunden oder werden sogar Teil der Wand. Zweitens ist ein solcher gemeinsamer Verfahrensschritt besonders ökonomisch.

In einer vorteilhaften Ausführungsform sind Anbauteile der Walze mittels des Kunststoffs mit der Wand verbunden.

Solche Ausführungen sind realisierbar, indem der Kunststoff, in dem die Fasern eingebettet sind, klebende Eigenschaften besitzt. So können ein oder mehrere Anbauteile außen oder innen an der Wand festgeklebt werden, bevor, während oder nachdem das Fasergeflecht mittels des Kunststoffs infiltriert worden ist. Eine Fertigung erfolgt je nach Bedarf folglich nicht zwingend in einem Verfahrensschritt.

In einer vorteilhaften Ausführungsform weist die Walze mindestens ein Anbauteil auf, welches ein Kunststoffformteil, insbesondere aus Polyurethan ist.

Solche Kunststoffformteile werden beispielsweise in einem Reaction-Injection-Molding-Verfahren (RIM-VerFahren) gefertigt. Als besonders geeignet haben sich Anbauteile aus einer Mischung aus Harz und Härter, insbesondere ein Biresin ®-Gemisch (® = eingetragene Wortmarke DE 731606 der Sika GmbH), mit einer nach ISO 868 erreichbaren Shorehärte von D81 erwiesen.

In einer vorteilhaften Ausgestaltung der erfindungsgemäßen Walze besteht der Kunststoff, in dem Fasern eingebettet sind, aus Epoxidharz.

Generell ließen sich verschiedene Matrixsysteme verarbeiten, wobei aus technischer Sicht ein Epoxidharz-System bevorzugt wird, da es besonders vorteilhaft Anforderungen an Festigkeitskennwerte in Kombination mit dem Fasergeflecht erfüllt sowie ein problemloses Infiltrieren des Fasergeflechts mit Kunststoff sicherstellt.

Aus ökonomischer Sicht vernetzt das Epoxidharz-System relativ schnell formstabil. Es ist ebenfalls von Vorteil, dass das System bei Raumtemperatur aushärtet.

Denkbare Anwendungsfälle für solche Walzen für Druckmaschinen sind
- Auftragswalzen,
- Plattenzylinder,
- Gummituchzylinder,
- Gegendruckzylinder,
- Heberwalzen,
- Gummiwalzen,
- Luftzylinder oder Luftachsen.

In einem vorteilhaften Ausführungsbeispiel, bei dem die Walze als Plattenzylinder ausgebildet ist, weist dieser ein Anbauteil auf, das sich über nahezu oder exakt die gesamte axiale Länge des Plattenzylinders erstreckt und einen Kanal besitzt, der zur Aufnahme einer Druckplatte vorgesehen ist.

In einem solchen Plattenzylinder sind somit bereits Befestigungseinrichtungen für die Aufnahme von Druckplatten integriert. Es sind hierbei diverse Realisierungsformen denkbar. Ausgehend von einer geradlinigen Geometrie des Querschnitts des ansonsten kreiszylinderförmigen Fasergeflechts kann beispielsweise ein RIM-Anbauteil mit einer flachen Unterseite der Länge nach in axialer Richtung an dem geradlinigen Abschnitt angeordnet sein. Bei dieser Anordnung ist ein kreiszylinderförmiger Außenumfang des Plattenzylinders mittels des Anbauteils realisierbar. Der Plattenkanal ist beispielsweise bereits in dem RIM-Anbauteil vorgesehen. Das Fasergeflecht und das RIM-Anbauteil werden besonders vorteilhaft gemeinsam infiltriert. Der Plattenkanal kann während des Infiltrierens durch ein Einlegeteil freigehalten werden. Alternativ kann ein Herstellungsverfahren für einen solchen Plattenzylinder auch vorsehen, dass der Plattenkanal nachträglich in das RIM-Anbauteil eingefräst wird. Dann ist der Einsatz von Einlegeteilen überflüssig.

Durch einen Plattenkanal ist ein Rotieren des Plattenzylinders mit einer Unwucht die Folge. Diese Unwucht kann mit Gegengewichten ausgeglichen werden. Allgemein bekannt sind solche Maßnahmen bei Radfelgen von Kraftfahrzeugen.

Bei erfindungsgemäßen Plattenzylindern kann es vorteilhaft sein, Anbauteile zur Unterstützung des Fasergeflechts auf der Innenseite des Fasergeflechts vorzusehen. Beispielswiese sind rotationssymmetrische Gestaltungen denkbar, die durch den Plattenkanal verursachte Unwuchten vermeiden. Solche Anbauteile können auch unterschiedliche Gewichte aufweisen und je nach Unwucht auf der Innenseite angeordnet werden.

Generell ist es auch denkbar, das Fasergeflecht wegen des Plattenkanals teilweise oder durchgehend zu durchtrennen. Die Anordnung innenliegender Anbauteile könnte resultierende Trennstellen im Fasergeflecht ausgleichen und somit ansonsten zwangsläufige Festigkeitseinbußen kompensieren. Ein solcher Ausgleich kann beispielsweise durch eine flächige Verbindung zwischen dem radial innenliegenden Anbauteil und dem radial außenliegenden Fasergeflecht bzw. dem Kunststoff, der das Fasergeflecht umgibt, in Bereichen der Überschneidung in Umfangsrichtung ausgebildet sein.

Besonders vorteilhaft ist es, eine Druckmaschine mit mindestens einer erfindungsgemäßen Walze auszustatten.

Eine solche Verwendung mindestens einer erfindungsgemäßen Walze in einer Druckmaschine ermöglicht unter anderem eine Reduzierung der Arbeitsbelastung für Maschinenpersonal, welches einen Walzenwechsel vorzunehmen hat.

Zur Herstellung der erfindungsgemäßen Walze kommt bevorzugt ein Verfahren mit zumindest den folgenden Verfahrensschritten zum Einsatz:
a) ein Bereitstellen eines Flechtkerns,
b) ein Umflechten des Flechtkerns mit Flechtfäden oder mit Flecht- und Stehfäden des Fasergeflechts und
c) ein Infiltrieren des Fasergeflechts mit Kunststoff.

Diverse Arten von Flechtkernen sind bereits vorgestellt worden, die im Verfahrensschritt a) bereitzustellen sind. Darüber hinaus kann es aus ökonomischen Erwägungen sinnvoll sein, den Flechtkern als verlorenen Kern vorzusehen, der nicht in der ausgehärteten Walze verbleibt und beispielsweise aus Sand besteht. Verlorene Kerne sind für jede zu fertigenden Walze neu herzustellen und können nicht wiederverwendet werden. Demgegenüber kann es auch Vorteile bieten, einen mehrfach verwendbaren Flechtkern vorzusehen. Insbesondere Flechtkerne aus Metall können zu diesem Zweck verwendet werden. Ein solches Flechtkern-Recycling könnte auch aus Umweltgesichtspunkten interessant sein. Als Material für den Flechtkern kommt darüberhinaus Aqua Core in Frage. Aqua Core ist ein Material mit ähnlichen Eigenschaften wie Gips.

Auch diverse Möglichkeiten der Gestaltung des Fasergeflechts gemäß Verfahrensschritt b) sind bereits vorgeschlagen worden. Hierbei ist insbesondere von Interesse, wie das mehrschichtige Umflechten vonstatten geht. Ein vorteilhaftes, erfindungsgemäßes Verfahren sieht vor, den Flechtkern mehrfach zu umflechten, ohne zwischen den Schichten die Flechtfäden und Stehfäden zu durchtrennen, zumindest nicht während des Flechtvorgangs. Es wird je Schicht üblicherweise über die Länge der Walze hinaus geflochten. Im Bereich des dabei entstehenden Überstands sind Versatzschritte der Flechtmaschine vorgesehen. Die Versatzschritte haben zur Folge, dass eine nächste Schicht des Fasergeflechts bezüglich des vorher geflochtenen Fasergeflechts versetzt auf der vorher geflochtenen Schicht des Fasergeflechts abgelegt wird.

Ein mehrschichtiger Aufbau der Wand ist aus mechanischen Erwägungen vorteilhaft.

Das Infiltrieren des Fasergeflechts mit Kunststoff gemäß Verfahrensschritt c) kann, wie bereits beschrieben, ein gemeinsames Infiltrieren des Fasergeflechts mit entsprechend positionierten Anbauteilen sein. Das Infiltrieren des Fasergeflechts ist also in einem separaten Verfahrensschritt ermöglicht, nachdem zuvor das Fasergeflecht trocken um den Flechtkern geflochten wurde. Das trockene Umflechten des Flechtkerns ermöglicht eine beeindruckende Anpassungsfähigkeit des Fasergeflechts an flechtfreundliche Konturen des Flechtkerns. Darüber hinaus sind verfahrensökonomische Vorteile zu erreichen, wenn das Infiltrieren gemäß Verfahrensschritt c) von dem Fasergeflecht und einem Anbauteil bzw. mehreren Anbauteilen gemeinsam erfolgt. Für ein Ankleben oder andersartiges Befestigen der Anbauteile am infiltrierten Fasergeflecht sind keine weiteren Verfahrensschritte nötig.

In einer vorteilhaften Verfahrensvariante ist vorgesehen, dass das Infiltrieren des Fasergeflechts mit einer Kunststoffmatrix gemäß Verfahrensschritt c) mit Hilfe eines Vakuum-Infusionsverfahrens vorgenommen wird. Die Kunststoffmatrix, abgekürzt auch als Matrix bezeichnet, wird generell mit Hilfe von Überdruck oder Unterdruck in das Fasergeflecht eingebracht.

In einer vorteilhaften Verfahrensvariante mit einem Ringanguss ist vorgesehen, dass das Infiltrieren c) des Fasergeflechts im Detail gegliedert ist in folgende Verfahrensschritte
c1) eine Infusion des Kunststoffes mittels eines Ringangusses an einem Ende der Walze, sodass von dort aus der infiltrierte Kunststoff in Richtung des anderen Endes gesogen wird, wenn Vakuum anliegt,
c2) ein Voranschreiten einer Kunststofffront des infiltrierten Kunststoffs durch das Geflecht und ggf. an Anbauteilen vorbei in axialer Richtung zum anderen Ende der Walze hin und
c3) ein Abschluss des Infiltrierens c) zum Zeitpunkt, wenn die Kunststofffront das andere Ende der Walze erreicht oder nachdem die Kunststofffront das andere Ende der Walze erreicht hat.

Diese Form des Infiltrierens hat den Vorteil, dass ein in Umfangsrichtung gesehen nahtloser Aufbau der Kunststoffschicht erfolgt, weil ein Zusammenlaufen von infiltriertem Kunststoff in Umfangsrichtung der Walze nicht vorgesehen ist.

Alternativ ist auch ein Linienanguss über die axiale Länge der Walze hinweg denkbar, was gegenüber dem Ringanguss einen Vorteil hinsichtlich der Schnelligkeit verschaffen könnte, mit welcher das Infiltrieren abgeschlossen werden könnte. Beim Linienanguss treffen allerdings zwei Kunststofffronten in Umfangsrichtung aufeinander.

In einem vorteilhaften Verfahren ist ein weiterer Verfahrensschritt d) vorgesehen, nachdem ein trockenes Umflechten gemäß Verfahrensschritt a) erfolgt ist. Demgemäß ist während des Verfahrensschritts d) mindestens ein Anbauteil bezüglich des Fasergeflechts zu positionieren. Im Anschluss findet folglich ein gemeinsames Infiltrieren des Fasergeflechts mit dem mindestens einen Anbauteil statt. Hierbei ist es von Vorteil, dass solch ein Anbauteil, das direkt mitvergossen wird, besonders sicher am Fasergeflecht fixiert ist und ohne weiteren Verfahrensaufwand befestigt werden kann. Zudem ist es möglich, in solchen Anbauteilen Geometrien vorzusehen bzw. Funktionen vorzusehen, die mit dem Bauteil aus Fasergeflecht an sich nicht zu realisieren wären.

Eine vorteilhafte Verfahrensvariante sieht nach dem Umflechten gemäß Verfahrensschritt a) zusätzlich einen Verfahrensschritt e) vor, wonach ein Positionieren mindestens eines Einlegeteils bezüglich des Fasergeflechts vorgesehen ist. Solche Einlegeteile sind als Platzhalter gedacht und sollen verhindern, dass in die von den Einlegeteilen ausgefüllten Räume Kunststoff fließen kann und dennoch der umliegende Raum mindestens teilweise von Kunststoff gefüllt wird.

Das Infiltrieren ist ohne verbleibende Lufteinschlüsse möglich, auch wenn das Infiltrieren des Fasergeflechts gemeinsam mit Anbauteilen oder Einlegeteilen vorgesehen ist.

Einlegeteile werden bezüglich des Fasergeflechts positioniert, können dabei allerdings durchaus auch in einem Anbauteil positioniert sein. Insbesondere kann auf diese Art und Weise ein Plattenkanal in einem RIM-Anbauteil freigehalten werden, das gemeinsam mit dem Fasergeflecht infiltriert wird. Nach der gemeinsamen Infiltration härtet der Kunststoff aus. Daraufhin oder gegen Ende des Aushärtens kann das Einlegeteil entnommen werden, sodass die freigehaltenen Stellen, die das Einlegeteil vorher eingenommen hat, nun für weitere Maßnahmen als Freiraum zur Verfügung stehen. Auf diese Art und Weise können auch mehrere Freiräume freigehalten werden.

Nachfolgend wird die Erfindung anhand mehrerer Ausführungsbeispiele unter Bezugnahme auf Zeichnungen erläutert. Es zeigen:
- Fig. 1: ein erstes Ausführungsbeispiel einer erfindungsgemäßen, als Plattenzylinder ausgebildeten Walze mit einem zugehörigen Werkzeug zur Herstellung eines Anbauteils, wobei das Anbauteil (Fig. 1 b) und das Fasergeflecht (Fig. 1c) als Radialschnitt dargestellt sind und das Werkzeug (Fig. 1 a) in perspektivischer Ansicht dargestellt ist,
- Fig. 2: das erste Ausführungsbeispiel aus Fig. 1, wobei das Anbauteil auf einer geradlinigen Seite des Querschnitts des Fasergeflechts auf dem Fasergeflecht angeordnet ist,
- Fig. 3: das erste Ausführungsbeispiel aus Fig. 1, wobei zwischen dem Anbauteil und dem Fasergeflecht infiltrierter Kunststoff und ein nachträglich in das Anbauteil eingefräster Kanal dargestellt sind,
- Fig. 4: einen Radialschnitt eines zweiten Ausführungsbeispiels eines erfindungsgemäßen Plattenzylinders mit einem außenliegenden Anbauteil mit einem Kanal,
- Fig. 5: einen Radialschnitt eines dritten Ausführungsbeispiels eines erfindungsgemäßen Plattenzylinders mit einem innenliegenden Anbauteil mit einem Kanal,
- Fig. 6: einen Radialschnitt eines vierten Ausführungsbeispiels eines erfindungsgemäßen Plattenzylinders mit einer Druckplatte und
- Fig. 7: ein auf einen Flechtkern aufgebrachtes Fasergeflecht.

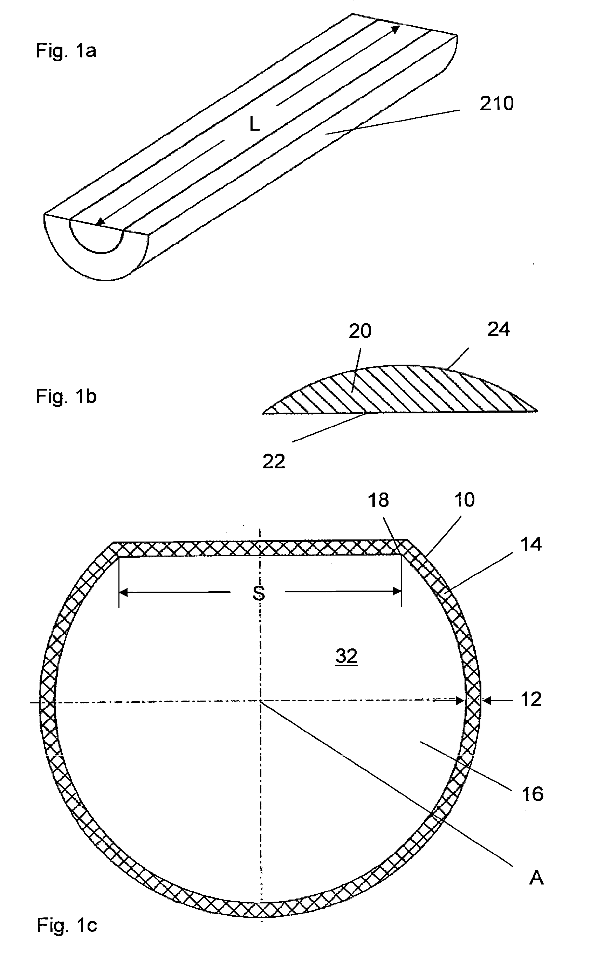

In den Figuren 1 bis 3 ist ein erstes Ausführungsbeispiel einer erfindungsgemäßen, als Plattenzylinder ausgebildeten Walze 1 dargestellt.

Der Plattenzylinder besteht, in radialer Richtung von innen nach außen gesehen, aus einem Flechtkern 16, einer darum geschlossenen Wand 10 und einem Anbauteil 20. Die Wand 10 besteht aus einem Fasergeflecht 14 und in das Fasergeflecht 14 infiltriertem Kunststoff. Der Kunststoff benetzt auch die Oberfläche des Fasergeflechts 14 am Außenumfang des Plattenzylinders in einem zylindrischen Bereich, in dem das Fasergeflecht 14 bzw. die benetzende Schicht aus Kunststoff den Außenumfang des Plattenzylinders bildet. Auf einer geradlinigen Seite des Querschnitts des Fasergeflechts 14 ist die benetzende Schicht aus Kunststoff zugleich eine Klebeschicht 50 zur Fixierung des Anbauteils 20. In diesem Bereich des Umfangs radial außerhalb der geradlinigen Seite bildet folglich das Anbauteil 20 den Außenumfang des Plattenzylinders und ist als Teil des Plattenzylinders zu verstehen.

Der Flechtkern 16 besteht aus einem Kunststoffschaum. Er ist ein vollausgefüllter Zylinder mit einer nicht dargestellten axialen Länge L entlang einer Zylinderachse A. In einem geradlinigen Abschnitt S des Querschnitts des ansonsten über die gesamte Länge L kreiszylindrischen Umfangs ist der Flechtkern 16 radial zurückgesetzt. Der Abschnitt S liegt somit im Querschnitt 32 des Flechtkerns 16 gesehen senkrecht zur Zylinderachse A, erstreckt sich jedoch als Fläche parallel zur Zylinderachse A über die Länge L des Plattenzylinders.

Die Wand 10 besteht aus einem um den Flechtkern 16 über die gesamte Länge L hinaus geflochtenen Fasergeflecht 14. Das Fasergeflecht 14 ist aus mehreren Schichten aufgebaut und liegt mit einer Spannung in radialer Richtung an dem Flechtkern 16 an. Die Wand 10 hat über den gesamten Umfang des Plattenzylinders eine nahezu konstante Wanddicke 12. Somit ist auch der Querschnitt der Wand 10 der Form des Flechtkerns 16 entsprechend in dem Bereich des Abschnitts S geradlinig.

Die Wanddicke 12 ist umso größer, je mehr Schichten des Fasergeflechts 14 übereinander liegen, wobei es sich als vorteilhaft herausgestellt hat, die Schichten zumindest leicht versetzt übereinander anzuordnen, um eine zylindrische Form der Walze 1 zu erreichen. Die Schichten entstehen durch mehrmaliges Überflechten des Flechtkerns 16 in axialer Richtung. Es wird dabei zunächst über die Länge L hinaus geflochten.

Nach dem mehrmaligen Überflechten wird das Fasergeflecht 14 an den Enden des zukünftigen Plattenzylinders beispielsweise mittels Klebeband auf dem Flechtkern 16 fixiert. Das Fasergeflecht 14 ist bis hierher immer noch trocken, also nicht mit Kunststoff infiltriert (Fig. 1 c). Die überstehenden Enden werden abgetrennt, sodass das Fasergeflecht 14 an den Enden zerschnitten ist. Diese Art der Abtrennung der Ränder der Schichten des Fasergeflechts 14 kann selbstverständlich auch deutlich materialsparender ausgeführt werden. Beispielsweise kann eine Abtrennung auch erst nach der Infiltration erfolgen.

Entsprechend der üblichen Funktion eines Plattenzylinders ist es vorgesehen, auf dieser erfindungsgemäßen Walze eine Druckplatte zu befestigen. Dazu ist in axialer Richtung ein Kanal 30 zur Aufnahme der Enden der Druckplatte vorgesehen. Der Kanal 30 hat eine Tiefe R in radialer Richtung, ist nach den Anforderungen bekannter Plattenbefestigungsmechanismen gestaltet und kann deutlich von der dargestellten Form abweichen. In dem Anbauteil 20 können diverse Kanalgeometrien vor dem Infiltrieren vorgesehen sein. Alternativ werden die Kanalgeometrien erst nachträglich mit spanenden Fertigungsverfahren in das Anbauteil 20 gemäß Fig. 1b eingebracht. So ist es auch im ersten Ausführungsbeispiel geschehen.

Die Figuren 1b und 1c zeigen einen Radialschnitt durch das erste Ausführungsbeispiel eines erfindungsgemäßen Plattenzylinders. Figur 1 a zeigt ein Werkzeug 210 für die Fertigung des Anbauteils 20 mittels eines RIM-Verfahrens. Das in einem solchen Verfahren erzeugte Anbauteil 20 gemäß Fig. 1b erstreckt sich über die gesamte axiale Länge L des Plattenzylinders. Demnach ist auch das Werkzeug 210 mindestens mit einer Länge L ausgeführt. Dem Plattenzylinder zugewandt weist das Anbauteil 20 eine ebene Fläche 22 auf, während dem Plattenzylinder abgewandt eine Rundung 24 vorgesehen ist. Die Rundung 24 weist exakt oder nahezu exakt die gleiche Krümmung wie der Plattenzylinder auf.

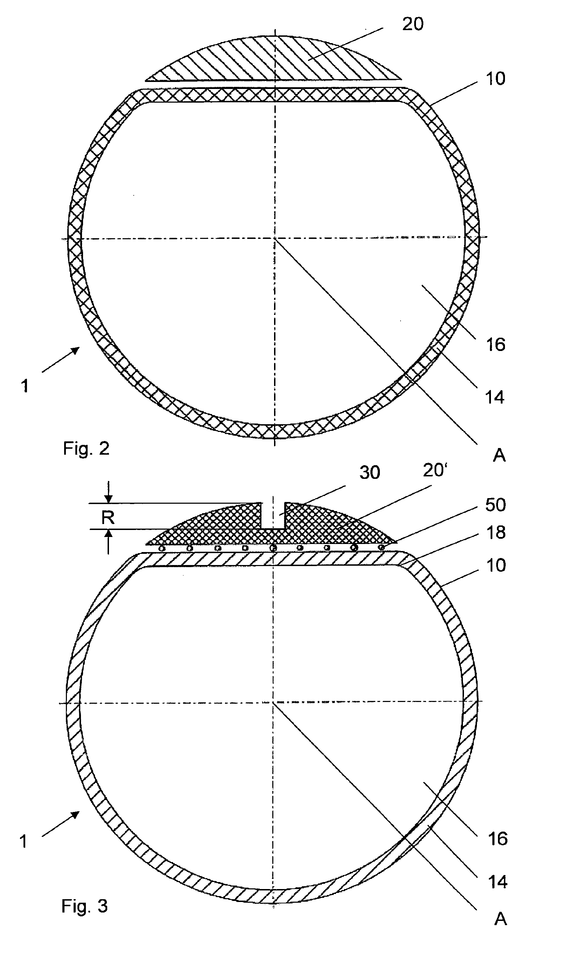

Figur 2 zeigt das Anbauteil 20 und Fasergeflecht 14 in der endgültigen Positionierung zueinander, sodass der daraus entstehende Plattenzylinder einen kreiszylinderförmigen Außenumfang aufweist.

Figur 3 zeigt darüber hinaus durch kleine Kreise angedeutet die Klebeschicht 50 zwischen einem Anbauteil 20' und dem Fasergeflecht 14. Wie oben bereits beschrieben entsteht die Klebeschicht 50 beim gemeinsamen Infiltrieren mit Kunststoff. Alternativ kann das Anbauteil 20' auch im Nachhinein an der vorher infiltrierten und bereits ausgehärteten Wand 10 in dem Bereich des Abschnitts S des Flechtkerns 16 fixiert werden.

In Figur 3 ist ein Kanal 30 in dem Anbauteil 20' dargestellt. Der Kanal 30 ist in das Anbauteil 20' gefräst worden, nachdem das Anbauteil 20' und das Fasergeflecht 14 gemeinsam infiltriert worden sind und der infiltrierte Kunststoff ausgehärtet ist. Ein solcher Kanal kann bereits in einem alternativen Anbauteil ähnlich dem Anbauteil 20' vorgesehen gewesen sein. Solch ein alternatives Anbauteil würde bspw. während des Infiltrierens mit einem nicht dargestellten Einlegeteil gefüllt, sodass in den mit dem Einlegeteil gefüllten Raum kein Kunststoff eindringen kann.

Achsparallele Kanten 18 des Abschnitts S des Flechtkerns 16 sind besonders flechtfreundlich ausgeführt, wenn sie nach außen nicht scharf sondern abgerundet in Kontakt mit dem Fasergeflecht 14 kommen.

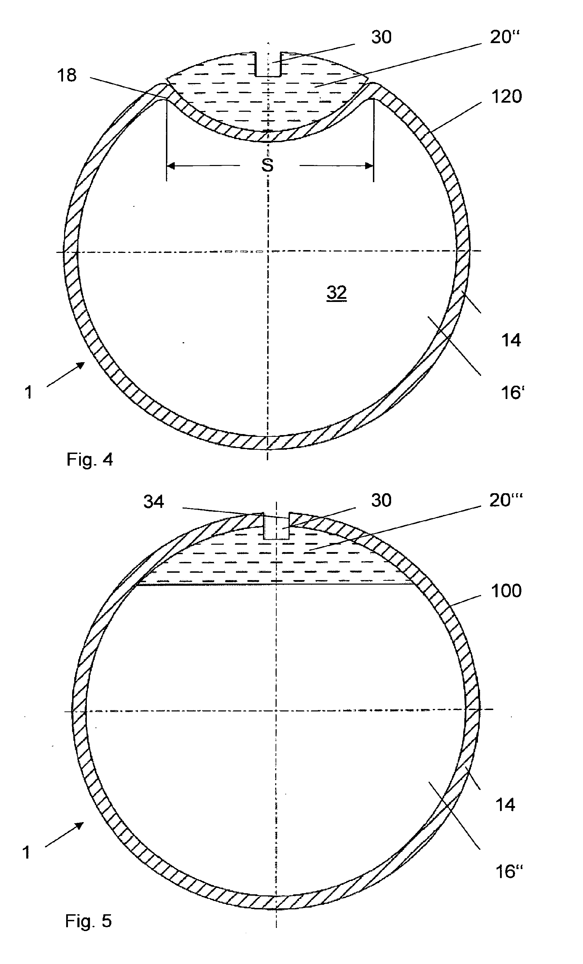

Figur 4 zeigt ein zweites Ausführungsbeispiel eines erfindungsgemäßen Plattenzylinders. Hierbei ist eine Wand 120 in flechtunfreundlicher Geometrie ausgeführt. In der Wand 120 soll wie im ersten Ausführungsbeispiel auch ein Fasergeflecht 14 ausgeführt sein, das um einen Flechtkern 16' herum geflochten ist. Flechtunfreundlich ist die Geometrie des Flechtkerns 16', weil dieser in seinem Querschnitt 32 einen konkaven Abschnitt S aufweist, der sich entlang seiner Längsachse erstreckt. Beim Umflechten des Flechtkerns 16' nimmt das trockene Fasergeflecht 14 nicht ohne Weiteres die konkave Form des Abschnitts S an. Hierzu müssten Maßnahmen gemäß einem in DE 10 2004 037 121 A1 offenbarten Verfahren beim Flechten vorgesehen werden, die das Fasergeflecht in dem Abschnitt S an der Oberfläche des Flechtkerns 16' anliegend halten.

In dem Bereich des Abschnitts S ist ein Anbauteil 20" auf der Wand 120 positioniert, in welchem in axialer Richtung der Kanal 30 ausgeführt ist. Vorteile könnte das zweite Ausführungsbeispiel bei der Positionierung des Kanals 30 auf der Wand 120 haben, weil die Position beinahe zwangsläufig in dem Abschnitt S eingenommen wird. Außerdem wirken beim Betrieb des Plattenzylinders tangentiale Kräfte auf den Kanal 30 und auf das Anbauteil 20". Diese tangentialen Kräfte würden bei einer solchen Gestaltung der Aufnahme des Anbauteils 20" auch über Formschluss mit der Wand 120 vom Plattenzylinder aufgenommen.

In einem alternativen Herstellungsverfahren eines erfindungsgemäßen Plattenzylinders kann die Wand zunächst infiltriert werden und anschließen aushärten. Anschließend kann ein vorgefertigtes Anbauteil daran fixiert werden, beispielsweise durch Klebung.

In Figur 5 ist ein drittes Ausführungsbeispiel eines erfindungsgemäßen Plattenzylinders mit einem dem Flechtkern 16 des ersten Ausführungsbeispiels zumindest ähnlichen Flechtkern 16" dargestellt. Ein Anbauteil 20"' ist im Inneren des Plattenzylinders an der Stelle an dem Flechtkern 16" angebracht, an der im ersten Ausführungsbeispiel der geradlinige Abschnitt S des Flechtkerns 16 gelegen hat. Im dritten Ausführungsbeispiel liegt das Anbauteil 20"' hingegen innerhalb einer nunmehr durchgehend kreiszylindrischen Wand 100. Wie bei den anderen Ausführungsbeispielen weist die Wand 100 ein Fasergeflecht 14 auf. Die Wand 100 ist zur Ausgestaltung des Kanals 30 in axialer Richtung radial durchbrochen, sodass eine Trennstelle 34 gebildet ist. Der Kanal 30 ist durch die Trennstelle 34 hindurch in das Anbauteil 20"' hinein ausgebildet. Durch die Trennstelle 34 ist der Plattenzylinder in seinen Festigkeitseigenschaften gegenüber den anderen Ausführungsbeispielen zunächst benachteiligt. Zur Kompensation überbrückt zum einen das Anbauteil 20"' die Trennstelle 34. Zum anderen kann der Übergang zwischen den beiden Enden der Wand 100 im Kanal 30 übergreifend gestaltet werden, sodass eine Verbindung zwischen diesen Enden gewährleistet ist.

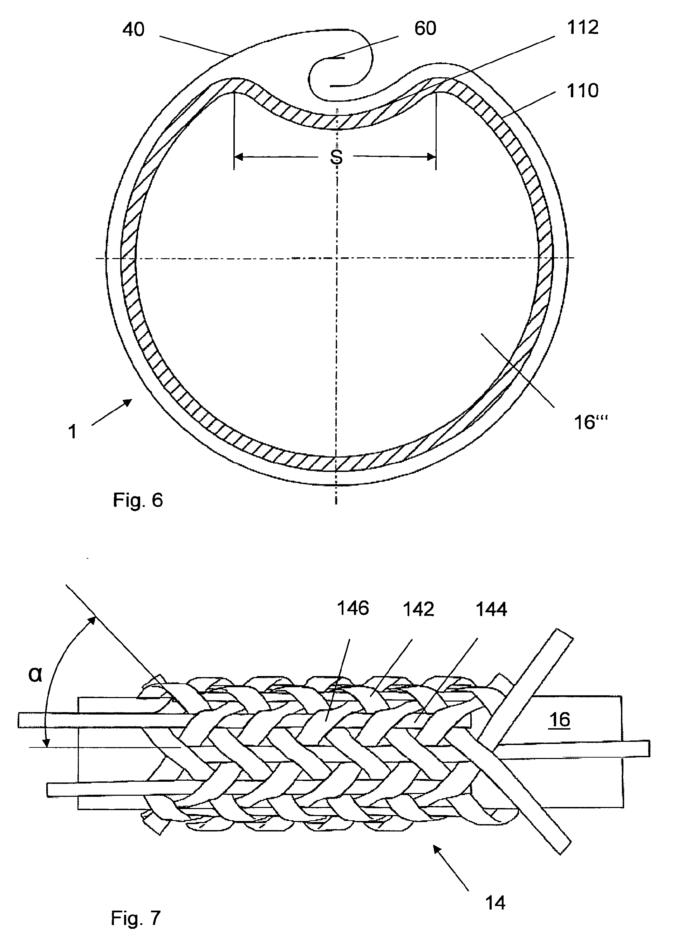

Figur 6 zeigt ein viertes Ausführungsbeispiel eines erfindungsgemäßen Plattenzylinders ohne Anbauteil. Das vierte Ausführungsbeispiel ähnelt bezüglich der Ausgestaltung einer Wand 110 dem zweiten Ausführungsbeispiel. Die Wand 110 ist über die Länge L des Plattenzylinders hinweg mit eingeschränkt kreiszylindrischem Querschnitt ausgeführt. Die Einschränkung besteht in einem konkav ausgeführten Bereich 112 radial außerhalb des Abschnitts S eines dem Flechtkern 16' aus dem zweiten Ausführungsbeispiel ähnlichen Flechtkerns 16"'.

Bei dieser Variante gemäß viertem Ausführungsbeispiel kann ein als Druckplatte 40 ausgebildeter Aufzug nahezu kreiszylinderförmig um den Plattenzylinder herum gelegt und radial außerhalb des Bereichs 112 mit einem Verschluss 60 verschlossen werden. Der Verschluss 60 ist derart durch gebogene Enden der Druckplatte 40 gebildet, dass die Enden ineinander verhaken.

Generell kommen alternative Befestigungsmöglichkeiten eines Aufzugs wegen des neuartigen Plattenzylinders in Betracht. Hierunter fallen auch in in Umfangsrichtung umlaufende Nuten einschiebbare Druckplatten. Die nicht dargestellten Nuten zur Aufnahme der Druckplatte sind am Außenumfang der Enden des Plattenzylinders vorgesehen. Alternativ kommen Vakuumfixierungen der Druckplatte in Frage. Die Vakuumfixierung kann durch mindestens eine axiale Nut im Plattenzylinder unterstützt werden. Auch sind Verklebungen der Druckplatte auf dem Plattenzylinder in Erwägung zu ziehen.

Figur 7 zeigt ein auf einen Flechtkern 16 aufgebrachtes triaxiales Fasergeflecht 14 in einer schematischen Darstellung, welche die Geometrie des Fasergeflechts 14 verdeutlichen soll. In axialer Richtung sind Stehfäden 144 einer Schicht des Fasergeflechts 14 zwischen Flechtfäden 142, 146 eingeflochten.

Zur Herstellung eines erfindungsgemäß geflochtenen Plattenzylinders können vorteilhafte Anregungen beispielsweise der DE 10 2004 017 311 A1 entnommen werden.

Statt triaxialen Geflechten sind auch biaxiale oder unidirektionale Ausführungen des Fasergeflechts denkbar. Bei unidirektionalen Ausführungen überkreuzen sich in einer Richtung ausgerichtete Fäden oder Bänder innerhalb einer Schicht nicht. Dennoch sind unidirektionale Ausführungen als erfindungsgemäß anzusehen.

Die Flechtfäden 142, 146 und Stehfäden 144 werden im triaxialen Geflecht in Flechtwinkeln α von 45° bis 90° und insbesondere von 60° bis 70° zueinander verflochten. Sie bestehen bevorzugt aus Kohlenstoff- und/oder Glasfasern. Demnach ist eine Hybridisierung des Fasergeflechts vorgesehen. Besonders vorteilhaft ist es, die Stehfäden 144 aus Kohlenstofffasern und die Flechtfäden 142, 146 aus Glasfasern zu gestalten. Auch Polyethylenfasern oder Naturfasern könnten verwendet werden. In den Fäden sind etwa 1.000 (1 k) bis 50.000 (50k) Einzelfilamente zusammengefasst. Bevorzugt sind in einem Prototyp 12k-Flechtfäden und 50k-Stehfäden verwendet worden.

Bei dem Aufbau des Fasergeflechts 14 aus mehreren Schichten können Zwischenkompaktierungsschritte notwendig sein.

Generell ist auch ein Aufziehen eines Flechtschlauches auf einen Flechtkern denkbar, was allerdings Nachteile gegenüber oben beschriebenen aufgeflochtenen Fasergeflechten 14 bzgl. Prozesssicherheit und mechanischer Eigenschaften hätte. Das Umflechten ermöglicht eine bessere Anpassung an den Flechtkern und die Flechtfäden werden nicht durch ein Aufziehen unnötig belastet.

## Patentansprüche

1. Walze für eine Druckmaschine mit einer Wand (10, 100, 110, 120), die wenigstens teilweise aus Kunststoff besteht, in dem Fasern eingebettet sind, **dadurch gekennzeichnet, dass** die Fasern in Form mindestens einer Schicht eines Fasergeflechts (14) angeordnet sind.

2. Walze nach Anspruch 1, **dadurch gekennzeichnet**, die Wand (10, 100, 110, 120) mehrere Schichten des Fasergeflechts (14) aufweist, die in radialer Richtung, insbesondere versetzt, übereinander liegen.

3. Walze nach einem der Ansprüche 1 oder 2, **dadurch gekennzeichnet, dass** das Fasergeflecht (14) wenigstens teilweise aus triaxial geflochtenen Flechtfäden (142, 146) und Stehfäden (144) oder aus biaxial geflochtenen Flechtfäden (142, 146) aufgebaut ist.

4. Walze nach Anspruch 3, **dadurch gekennzeichnet, dass** die Flechtfäden (142, 146) in einem Flechtwinkel (α) von 45° bis 90°, insbesondere von 60° bis 70°, zueinander verflochten sind.

5. Walze nach einem der Ansprüche 3 oder 4, **dadurch gekennzeichnet, dass** die Stehfäden (144) in axialer Richtung der Walze (1) ausgerichtet und zwischen den Flechtfäden (142, 146) eingeflochten sind.

6. Walze nach einem der vorangehenden Ansprüche, **dadurch gekennzeichnet, dass** die Fasern aus thermoplastischem Kunststoff, insbesondere aus Kohlenstoff-, Glas-, Aramid-, Natur- oder anderen flechtbaren Fasern bestehen.

7. Walze nach einem der vorangehenden Ansprüche, **dadurch gekennzeichnet, dass** die Wand (10, 100, 110, 120) mindestens annähernd kreiszylinderförmig um einen mindestens annähernd kreiszylinderförmigen Flechtkern (16, 16', 16", 16"') herum angeordnet ist.

8. Walze nach Anspruch 7, **dadurch gekennzeichnet, dass** der Flechtkern (16, 16', 16", 16"') aus einem Kunststoffschaum besteht oder ein hohles Kunststoffformteil aus einem Polyester, insbesondere aus Polyethylenterephthalat, ist.

9. Walze nach einem der Ansprüche 7 oder 8, **dadurch gekennzeichnet, dass** der Flechtkern (16, 16', 16", 16"') einen im Wesentlichen kreiszylindrischen Querschnitt (32) axial durchgängig mit einem radial zurückgesetzten Abschnitt (S) aufweist.

10. Walze nach Anspruch 9, **dadurch gekennzeichnet, dass** der Abschnitt (S) geradlinig oder konkav verlaufend ausgebildet ist.

11. Walze nach einem der Ansprüche 9 oder 10, **dadurch gekennzeichnet, dass** der Flechtkern (16, 16', 16", 16"') abgerundete Kanten (18) in axialer Richtung aufweist, insbesondere zur Begrenzung des Abschnitts (S).

12. Walze nach einem der vorangehenden Ansprüche, **dadurch gekennzeichnet, dass** das Fasergeflecht (14) nahtlos rundgeflochten ist.

13. Walze nach einem der vorangehenden Ansprüche, **dadurch gekennzeichnet, dass** die Walze (1) mindestens ein Anbauteil (20, 20', 20", 20"') aufweist, das in dem Kunststoff, in dem die Fasern eingebettet sind, eingebettet ist oder das mit der Wand (10) verbunden ist.

14. Walze nach einem der vorangehenden Ansprüche, **dadurch gekennzeichnet, dass** die Walze (1) mindestens ein Anbauteil (20, 20', 20", 20"') aufweist, welches ein Kunststoffformteil, insbesondere aus Polyurethan, ist.

15. Walze nach einem der vorangehenden Ansprüche, **dadurch gekennzeichnet, dass** der Kunststoff, in dem Fasern eingebettet sind, ein Epoxidharz ist.

16. Walze nach einem der vorangehenden Ansprüche, **dadurch gekennzeichnet, dass** die Walze (1) ein Plattenzylinder ist.

17. Walze nach Anspruch 16, **dadurch gekennzeichnet, dass** die Walze (1) ein Anbauteil (20, 20', 20", 20"') aufweist, das sich über nahezu oder exakt die gesamte axiale Länge der Walze (1) erstreckt und einen Kanal (30) aufweist, in den eine Druckplatte (40) einsetzbar ist.

18. Walze nach einem der Ansprüche 1 bis 15, **dadurch gekennzeichnet, dass** die Walze (1) ein Gummituchzylinder, eine Auftragswalze, ein Gegendruckzylinder, eine Heberwalze, eine Gummiwalze, ein Luftzylinder oder eine Luftachse ist.

19. Druckmaschine mit einer Walze (1) nach einem der vorangehenden Ansprüche.

20. Verfahren zum Herstellen einer Walze (1) nach einem der Ansprüche 1 bis 18, mit zumindest folgenden Verfahrensschritten
a ein Bereitstellen eines Flechtkerns (16, 16', 16", 16"'),
b ein Umflechten des Flechtkerns (16, 16', 16", 16"') mit Flechtfäden (142, 146) oder mit Flechtfäden (142, 146) und Stehfäden (144) und
c ein Infiltrieren des Fasergeflechts (14) mit Kunststoff.

21. Verfahren nach Anspruch 20, **dadurch gekennzeichnet, dass** als Flechtkern (16, 16', 16", 16"') ein verlorener Kern oder ein mehrfach verwendbarer Kern, insbesondere aus Metall, verwendet wird.

22. Verfahren nach einem der Ansprüche 20 oder 21, **dadurch gekennzeichnet, dass** das Umflechten (b) über eine axiale Länge (L) der Walze hinweg mehrfach wiederholt wird, sodass mehrere Schichten des Fasergeflechts (14) entstehen.

23. Verfahren nach einem der Ansprüche 20 bis 22, **dadurch gekennzeichnet, dass** das Infiltrieren (c) des Fasergeflechts (14) mit Hilfe eines Vakuum-Infusionsverfahrens vorgenommen wird.

24. Verfahren nach einem der Ansprüche 20 bis 23, **dadurch gekennzeichnet, dass** das Infiltrieren (c) des Fasergeflechts (14)
c1 mittels eines Ringangusses an einem Ende der Walze (1) beginnt,
c2 eine Front des Kunststoffs in axialer Richtung voranschreitet und
c3 zu dem Zeitpunkt, wenn oder nachdem die Front das andere Ende der Walze (1) erreicht, das Infiltrieren (c) abgeschlossen wird.

25. Verfahren nach einem der Ansprüche 20 bis 24, **dadurch gekennzeichnet, dass** nach dem Umflechten (a) ein zusätzlicher Verfahrensschritt erfolgt, wonach
d ein Positionieren mindestens eines Anbauteils (20, 20', 20", 20"') bezüglich des Fasergeflechts (14) vorgesehen ist,
sodass anschließend ein gemeinsames Infiltrieren (c) des Fasergeflechts (14) mit dem mindestens einen Anbauteil (20, 20', 20", 20"') stattfindet.

26. Verfahren nach Anspruch 25, **dadurch gekennzeichnet, dass** nach dem Umflechten (a) ein zusätzlicher Verfahrensschritt erfolgt, wonach
e ein Positionieren mindestens eines Einlegeteils bezüglich des Fasergeflechts (14) vorgesehen ist,
und dass nach dem Infiltrieren (c) und anschließendem Aushärten ein zusätzlicher Verfahrensschritt erfolgt, wonach
f ein Entnehmen des Einlegeteils vorgesehen ist,
sodass an den Stellen, die das Einlegeteil vorher eingenommen hat, mindestens ein Freiraum freigehalten ist, der ohne das Positionieren des Einlegeteils
(e) im Zuge des nachfolgenden Infiltrierens (c) mit Kunststoff infiltriert worden wäre.
